# EUROPEAN PATENT SPECIFICATION

(11) **EP 0 707 947 B1**
(45) Date of publication and mention of the grant of the patent: **24.05.2000**
(21) Application number: 95202780.3
(22) Date of filing: 16.10.1995
(51) Int. Cl.: B32B 3/12, B32B 29/00, E04C 2/36

(54) **Form-retaining honeycomb panel**
Formfester Platte mit Honigwabenstruktur
Panneau indéformable en miel d'abeille

(30) Priority: 17.10.1994 NL 9401706
(43) Date of publication of application: 24.04.1996
(73) Proprietor: BESIN B.V., 3851 BD Ermelo (NL)
(72) Inventor: van Bree, Wilhelmus Hendrikus, NL-3851 BD Ermelo (NL)
(74) Representative: De Hoop, Eric

(56) References cited:
- EP-A- 0 008 960
- EP-A- 0 512 646
- FR-A- 2 439 854
- LU-A- 86 594
- US-A- 4 606 959

## Description

The present invention relates to a form-retaining honeycomb panel for the building industry, as described in the preamble of claim 1.

Such a panel is known from the American patent US-A-4.606.959.

Frequent use is made of prefabricated panels of various kinds in the building industry, such as, for example, soft board or plaster board consisting of a gypsum core plate on to which a layer of paper is applied on both principal faces. Such panels can be used in walls and in particular in ceilings, for example for plating a hanging ceiling system. The building industry is continually searching for the lightest and strongest sort of panels.

Although honeycomb panels which can, for example, be made of a thick quality paper or of cardboard, are light-weight as well as strong, they have hardly been used as construction material in the building industry up until now on account of their sensitivity to moisture. The reasons for this are as follows.

If such a panel dries irregularly or is moistened, for example by painting or wallpapering one side of it, the panel will warp. This problem is caused as a result of paper changing shape if the moisture content changes. Irregular drying (for example by natural circumstances) or moistening (for example by applying paint or glue afterwards) of two opposing panel faces or panel support plates thus brings about change in dimension and warping of the panel. The strength of the panel furthermore decreases if the entire moisture content thereof increases, the panel thus completely loosing its strength and becoming limp, if it is saturated with moisture. This makes these honeycomb panels unsuitable for walls and ceilings, that being the reason why the building industry was prejudiced against the use of honeycomb panels.

The panel known from the state of the art has a moisture-impermeable layer of polyvinyl chloride (PVC) with a thickness of between 2 and 3 mm, and thus with the disadvantage that the moisture-impermeable layer contributes in a considerable way to the weight of the panel. Furthermore, on the grounds of the large added quantity of PVC connected with it, the moisture sensitive material of the known panel is difficult to recycle at the end of the life span of the panel.

The invention aims at providing a honeycomb panel suitable for the building industry of the sort described in the preamble, which does not have the drawbacks of the prior art.

For this purpose the invented panel is characterized in that the moisture-impermeable layer is a polyethene film or an aluminium film. A moisture-impermeable film layer can, of course, be applied to both panel faces, that is to both support plates.

Such a film layer is light-weight and can easily be separated from the moisture sensitive material, for instance paper, in a so-called pulper. To achieve this separation the panel is shredded at the end of its life span and stirred in a water bath in a pulper, in the course of which the film is released and can be scooped up out of the bath. The remaining paper pulp can then be reused to produce paper products.

A honeycomb panel for the building industry is thus provided which is ready for use, economical and easy to produce and process, which can be wallpapered and painted, and which is very light-weight and flexurally stiff. The panel is and remains so strong, that when used as ceiling panel lighting fittings can be built into it, without them sagging noticeably. The moisture-impermeable layer ensures that the panel retains the shape and dimensions it was given in the fabrication process.

It is preferable if the moisture-impermeable film layer, which can, for example, be glued to the respective panel face has a thickness between 12 and 20 µm. A polymer adhesive or perhaps a thin layer of polyethene can be used as glue.

A honeycomb panel with the sandwich construction described above can be made in an advantageous way, by first of all applying the moisture-impermeable layer to the respective support plate, and subsequently gluing the sandwich panel construction of the support plates and the honeycomb core together. Thus the support layer provided with the moisture impermeable layer can be prefabricated in an economical way. Support plates prefabricated as half-product by third persons can be used, for example made of paper which is coated with the moisture impermeable layer.

The outer surface of the film preferably has a structured texture. This results in an improvement as far as painting and wallpapering of the honeycomb panel are concerned. Such a structuring can be applied in that at least one surface of the film is first of all roughened by subjecting it to a corona treatment, prior to applying it to the respective support plate. In the case of such a prior corona treatment of the film before applying it to the support plate, also called "flaming" the film, the film is subjected to a corona discharge, whereby micro pores are driven into the material. These micropores improve the bonding of paint or wallpaper glue to the film, which makes the produced honeycomb panel more easily processable. On the other hand, such a roughening can also be applied to the side of the film which is to be glued to the support plate for the improvement of the glued joint with the support plate.

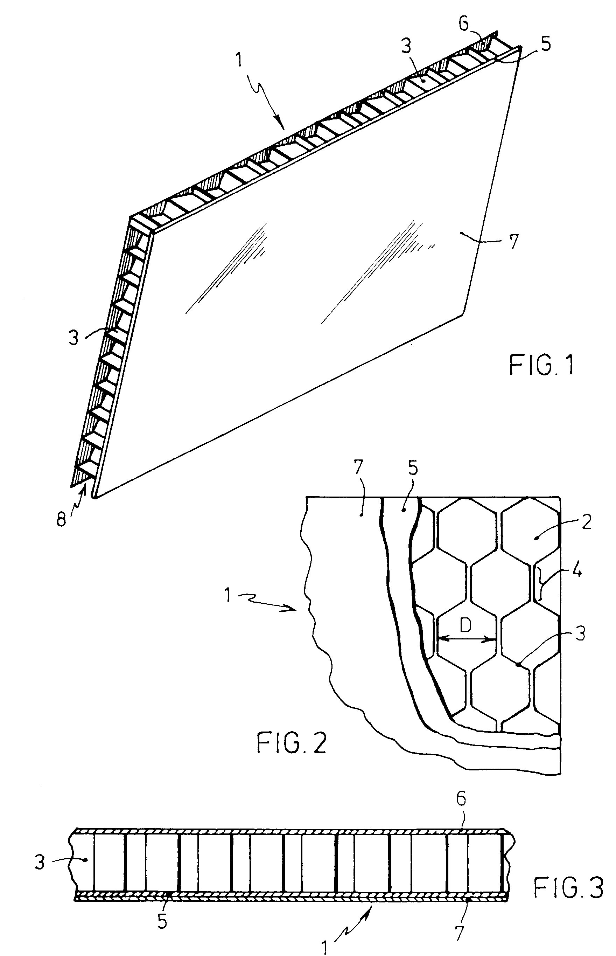

The invention will now be explained with reference to an exemplary embodiment illustrated in the accompanying drawing, in which
figure 1 is a perspective view of a honeycomb panel according to the invention;
figure 2 is a partially cut-open view of the principal face of the honeycomb panel of figure 1; and
figure 3 is a cross sectional view along a face perpendicular to the principal faces of the honeycomb panel of the figures 1 and 2.

The figures show a honeycomb panel 1, in which the same parts thereof are indicated in various figures by the same reference numbers. The panel 1 comprises a honeycomb core 8 which is formed by trapezoidally corrugated, upright strips of paper. It is, of course, also possible to use strips of another light-weight material than paper. Neighbouring strips are placed over paths 4 next to each other and are adhered to one another by means of gluing, so that they form upright walls 3, which form hexagonal spaces with a diameter D. These spaces form the cells 2 of a hexagonal grid which constitutes the honeycomb core 8.

Apart from a light or heavy quality paper (cardboard) or another cellulose material, the honeycomb core 8 can also be made of a synthetic material. The cells 2 of the honeycomb core 8 can be filled with an insulating material, such as expanded polystyrene. The honeycomb panel 1 can be cheaply made of material which is in itself flexurally slack, but the panel as a whole has a high resistance to compression in a direction perpendicular to the principal face and has a high flexural stiffness.

Support plates 5 and 6 are attached on both main sides of the core, by gluing them to the strips which form the walls 3. The strips are folded over at the panel edges and go back whilst forming the hexagonal cells 2.

The support plates 5 and 6 form the outer panel faces. A moisture impermeable layer 7 of polyethene film is glued to the support plate 5. Prior to gluing the support plate 5, the side of the polyethene film 7 facing away from the panel 1 is subjected to a corona treatment, whereby micro pores were made in the surface of the film 7. Because of this roughening of the film 7, this side of the panel can be painted or wallpapered more easily, without the moisture from the paint or the wallpaper glue penetrating the moisture sensitive parts of the panel. Thus the panel is prevented from being moistened assymmetrically, for example because only the support plate 5 is moistened, and the panel is prevented from warping because of that. Thus the panel remains dry and as a result retains its shape and strength, whilst the application of agents which are commonly used in the building industry and which contain moisture is nevertheless possible. In addition, the other side of the film 7 can be subjected to a corona treatment for the improvement of the glue joint with the support plate.

Instead of polyethene the film can be made of aluminium or another moisture impermeable material. Moreover, a moisture impermeable layer 7 can be applied to the support plate 6.

A honeycomb panel 1 with the sandwich construction according to the figures was made, a moisture impermeable layer 7 being glued to both support plates 5 and 6. The support plates 5 and 6 are built up from the inside to the outside of a paper layer of "Schrenz" quality, and a paper layer of "Kraft" quality glued to it, to which a polyethene film has been glued as the outermost layer. Including the moisture impermeable film these support plates have a surface density of 750 g/m². Of that the polyethene film accounts for 15 g/m², and the middle kraft paper layer for 50 g/m². The honeycomb core is made of paper of "Testliner" quality of 180 g/m² and has a cell diameter D of 13 mm. With a panel thickness of 25 mm, the core contributes 1000 g/m² to the surface density of the panel 1, and the glue used contributes approximately 200 g/m². The total surface density of the panel 1 then amounts to 2700 g/m².

Such panels can be produced with a dimension of 1200 x 1200 x 25 mm³, with a weight of approximately 3.9 kg, and are thus easily to handle and work. If this product is used as ceiling panel, it shows no sagging if a lighting element is built into it. This is not possible in the case of prior ceiling panels.

## Claims

1. Honeycomb panel (1) for the building industry, made of a material such as cellulose material, the moisture content of which is variable, and the strength and/or the form of which is sensitive to the action of moisture, and having the form of a sandwich construction comprising a honeycomb core and two support plates (5,6), which define panel surfaces and between which the core is glued, a moisture-impermeable layer (7) being applied to the outer side of at least one of the panel surfaces, **characterized in that** the moisture-impermeable layer (7) is a polyethene film or an aluminium film.

2. Honeycomb panel (1) according to claim 1, **characterized in that** the film (7) has a thickness between 12 and 20 µm.

3. Honeycomb panel (1) according to claim 1 or 2, **characterized in that** the outer surface of the film (7) is structured.

4. Honeycomb panel (1) according to claim 1,2 or 3, **characterized in that** the film (7) is glued to the respective support plate.

5. Honeycomb panel (1) according to any one of the claims 1-4, **characterized in that** the honeycomb core (8) and the support plates (5,6) are made of a paper material.

6. Honeycomb panel (1) according to any one of the claims 1-4, **characterized in that** the moisture-impermeable layer (7) is a polyethene film.

7. Method for making a honeycomb panel (1) according to any one of the claims 1-6, **characterized by** firstly applying the moisture-impermeable layer (7) to the respective support plate (5,6) and subsequently gluing the support panels and the core (8) together to form the honeycomb panel (1).

8. Method according to claim 7, **characterized in that** at least one surface of the film (7) is first of all roughened by subjecting it to a corona treatment before applying it to the respective support plate (5,6).

9. Use of a honeycomb panel (1) according to any one of the claims 1-6 in a ceiling structure.

## Patentansprüche

1. Wabenplatte (1) für die Bauindustrie, aus einem Material wie Zellulose-Material hergestellt, dessen Feuchtigkeitsinhalt variabel ist, und dessen Stärke und/oder Form empfindlich auf die Feuchtigkeitseinwirkung reagiert, mit der Form einer Sandwichkonstruktion mit einem Wabenkern und zwei Stützplatten (5, 6), die die Plattenseiten bestimmen, wozwischen der Kern geleimt ist, wobei eine feuchtigkeitsundurchlässige Schicht (7) auf die Außenseite von zumindest einer der Plattenseiten angeordnet ist, **dadurch gekennzeichnet**, daß die feuchtigkeitsundurchlässige Schicht (7) eine polyethene Folie oder eine Aluminiumfolie ist.

2. Wabenplatte (1) gemäß Anspruch 1, **dadurch gekennzeichnet**, daß die Folie (7) eine Dicke zwischen 12 und 20 µm hat.

3. Wabenplatte (1) gemäß Anspruch 1 oder 2, **dadurch gekennzeichnet**, daß die Außeroberfläche der Folie (7) strukturiert ist.

4. Wabenplatte (1) gemäß Anspruch 1, 2 oder 3, **dadurch gekennzeichnet**, daß die Folie (7) an die jeweilige Stützplatte geleimt ist.

5. Wabenplatte (1) gemäß einem der Ansprüche 1-4, **dadurch gekennzeichnet**, daß der Wabenkern (8) und die Stützplatten (5, 6) aus einem Papiermaterial hergestellt sind.

6. Wabenplatte (1) gemäß einem der Ansprüche 1-4, **dadurch gekennzeichnet**, daß die feuchtigkeitsundurchlässige Schicht (7) eine polyethene Folie ist.

7. Verfahren zum Herstellen einer Wabenplatte (1) gemäß einem der Ansprüche 1-6, **dadurch gekennzeichnet**, daß zuerst die feuchtigkeitsundurchlässige Schicht (7) an der jeweiligen Stützplatte (5, 6) angebracht wird, und nachher die Stützplatten und den Kern (8), die zusammen die Wabenplatte (1) formen, zusammen geleimt werden.

8. Verfahren gemäß Anspruch 7, **dadurch gekennzeichnet**, daß zumindest eine Oberfläche der Folie (7) durch eine Koronabehandlung zuerst rauher gemacht wird, bevor es an die jeweilige Stützplatte (5, 6) anzubringen.

9. Verwendung einer Wabenplatte (1) gemäß einem der Ansprüche 1-6 in einer Deckenstruktur.

## Revendications

1. Panneau (1) en nid d'abeilles pour l'industrie du bâtiment, constitué d'une matière telle qu'une matière de cellulose, panneau dont la teneur en humidité est variable et dont la résistance et/ou la forme est sensible à l'action de l'humidité, et ayant la forme d'une construction en sandwich comprenant une âme en nid d'abeilles et deux plaques supports (5, 6) qui définissent les faces du panneau entre lesquelles l'âme est collée, une couche (7) imperméable à l'humidité étant appliqué sur au moins une des faces du panneau, caractérisé en ce que la couche (7) imperméable à l'humidité est un film de polyéthène ou un film d'aluminium.

2. Panneau (1) en nid d'abeilles selon la revendication 1, caractérisé en ce que le film (7) a une épaisseur comprise entre 12 pm et 20 µm.

3. Panneau (1) en nid d'abeilles selon la revendication 1 ou 2, caractérisé en ce que la surface extérieure du film (7) est structurée.

4. Panneau (1) en nid d'abeilles selon les revendications 1, 2 ou 3, caractérisé en ce que le film (7) est collé sur la plaque support respective.

5. Panneau (1) en nid d'abeilles selon l'une quelconque des revendications 1 à 4, caractérisé en ce que l'âme (8) en nid d'abeilles et les plaques supports (5, 6) sont en papier.

6. Panneau (1) en nid d'abeilles selon l'une quelconque des revendications 1 à 4, caractérisé en ce que la couche (7) imperméable à l'humidité est un film de polyéthène.

7. Procédé pour fabriquer un panneau (1) en nid d'abeilles selon l'une quelconque des revendications 1 à 6, caractérisé par l'application, en premier, de la couche (7) imperméable à l'humidité sur la plaque support respective (5, 6), les panneaux supports et l'âme (8) étant ensuite collés ensemble pour former le panneau (1) en nid d'abeilles.

8. Procédé selon la revendication 7, caractérisé en ce qu'au moins une surface du film (7) est avant tout rendue rugueuse en la soumettant à un traitement par effet corona avant d'appliquer le film sur la plaque support respective (5, 6).

9. Utilisation d'un panneau (1) en nid d'abeilles selon l'une quelconque des revendications 1 à 6 dans une structure de plafond.
